# EUROPÄISCHE PATENTSCHRIFT

(11) **EP 0 879 494 B1**
(45) Veröffentlichungstag und Bekanntmachung des Hinweises auf die Patenterteilung: **10.04.2002**
(21) Anmeldenummer: 97902269.6
(22) Anmeldetag: 30.01.1997
(51) Int. Cl.: H01S 3/0941, H01S 3/042, H01S 3/109, H01S 3/06, H01S 3/05

(54) **OPTISCH GEPUMPTER VERSTÄRKER, INSBESONDERE EIN FESTKORPER-VERSTÄRKER**
OPTICALLY PUMPED AMPLIFIER, IN PARTICULAR A SOLID AMPLIFIER
AMPLIFICATEUR POMPE DE MANIERE OPTIQUE, NOTAMMENT AMPLIFICATEUR A L'ETAT SOLIDE

(30) Priorität: 07.02.1996 DE 19604425; 03.05.1996 DE 19617711
(43) Veröffentlichungstag der Anmeldung: 25.11.1998
(73) Patentinhaber: Fraunhofer-Gesellschaft zur Förderung der angewandten Forschung e.V., 80636 München (DE)
(72) Erfinder: DU, Keming, D-52062 Aachen (DE)
(74) Vertreter: Grimm, Ekkehard
(86) Internationale Anmeldenummer: EP9700410
(87) Internationale Veröffentlichungsnummer: WO9729529

(56) Entgegenhaltungen:
- EP-A- 0 493 235
- WO-A-96/19855
- DE-A- 4 402 668
- GB-A- 2 215 906
- US-A- 5 268 978
- US-A- 5 485 482
- NTIS TECH NOTES, Nr. 6, 1986, SPRINGFIELD, VA US, Seite 720 XP002031127 "HYBRID LASER WOULD COMBINE POWER WITH EFFICIENCY"
- APPLIED PHYSICS LETTERS, Bd. 56, Nr. 23, 4.Juni 1990, NEW YORK US, Seiten 2288-2290, XP000150005 R.SCHEPS ET AL: "ALEXANDRITE LASER PUMPED BY SEMICONDUCTOR LASERS"
- LEOS 88, 2. - 4.November 1988, SANTA CLARA (US), Seiten 494-495, XP000075744 I.N.DULING III,ET AL: "HIGH POWER MODE-LOCKED Nd:FIBER LASER PUMPED BY AN INJECTION-LOCKED DIODE ARRAY"

## Beschreibung

Die vorliegende Erfindung betrifft einen optisch gepumpten Verstärker, insbesondere einen Festkörper-Verstärker, mit einem Verstärkungsmedium und mit einer optischen Pumpanordnung, über die Pumpstrahlung in das Verstärkungsmedium eingekoppelt wird, wobei die Pumpstrahlung vor der Einkopplung geformt wird und das Volumen des Verstärkungsmediums nur partiell gepumpt wird, und wobei das gepumpte Volumen des Verstärkungsmediums im Querschnitt senkrecht zur optischen Achse einen annähernd rechteckigen Querschnitt aufweist.

Optische gepumpte Verstärker in Form von Laseranordnungen haben in fast allen Bereichen der Technik Einzug gehalten. Heutige Entwicklungen im Bereich von Laseranordnungen sind unter anderem darauf gerichtet, den Wirkungsgrad zu erhöhen, die Strahlqualität zu verbessern und die Ausgangsstrahlung definiert zu formen und zu transformieren.

Eine Klasse von Lasern, die in den vergangenen Jahren verstärkt Anwendung in der Materialbearbeitung und der Medizintechnik gefunden hat, sind Festkörperlaser, die sich dadurch auszeichnen, daß mit ihnen, insbesondere in niedrigen Leistungsklassen, hohe Strahlqualitäten erzeugt werden können. Solche Festkörperlaser zeichnen sich weiterhin durch die geringe, erreichbare Baugröße aus, typischerweise mit einer Länge von etwa 8 cm und einem Durchmesser von einem 1 cm.

Während in früheren Zeiten Festkörperlaser mittels Lampen gepumpt wurden, wird zunehmend das Festkörpermedium mittels Dioden bzw. Diodenfeldern gepumpt.

Gegenüber lampengepumpten Festkörperlasern zeichnen sich diodengepumpte Festkörperlaser unter anderem durch eine hohe Effizienz, hohe Strahlqualität, lange Lebensdauer sowie die geringen Abmessungen, die insbesondere mit einer solchen Dioden-Pumpanordnung erreicht werden können, aus. In Verbindung mit Diodenlaser-Pumpanordnungen lassen sich verschiedenartige Lasersysteme realisieren. In Bezug auf Festkörperlaser wird prinzipiell zwischen axial und transversal gepumpten Festkörperlasern (beispielsweise mittels Dioden gepumpten Festkörperlasern) unterschieden. Im allgemeinen wird die axiale Pumpanordnung für Laser mit einer Ausgangsleistung bis zu einigen 10W verwendet, während die transversale Pumpanordnung zum Skalieren der Ausgangsleistung bis einige Kilowatt bevorzugt wird.

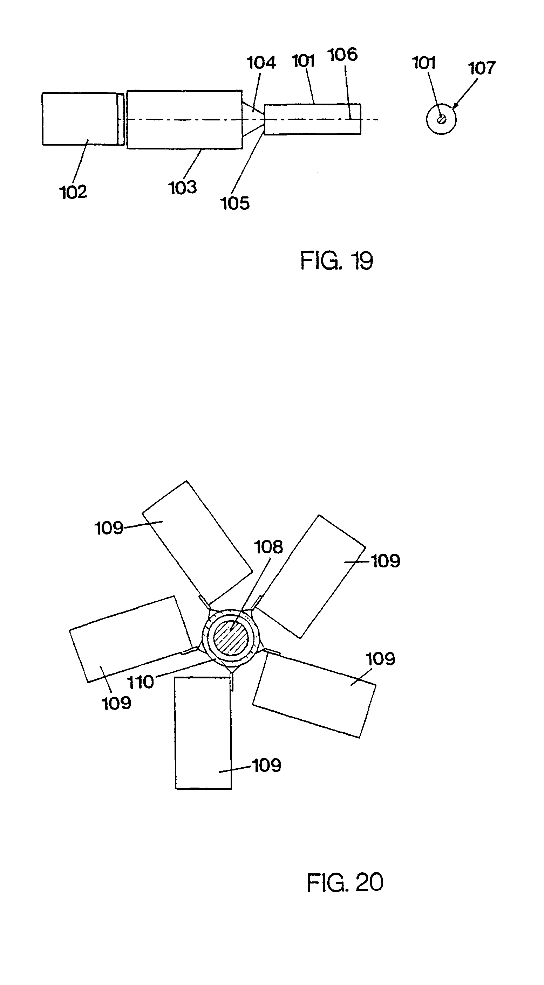

Der limitierende Faktor für die Strahlqualität und die Ausgangsleistung optisch gepumpter Verstärker, dies gilt auch für diodengepumpte Festkörperlaser, liegt in der thermischen Störung, die durch die unvermeidliche Verlustwärme im Verstärkungsmedium bzw. im Lasermedium verursacht wird. Weiterhin spielt die Anpassung zwischen dem gepumpten Volumen und dem Modenvolumen des Resonators für den Wirkungsgrad und die Strahlqualität eine entscheidende Rolle. Um diesen Forderungen nachzukommen, wird das Verstärkungsmedium, bei Festkörperlasern das Festkörpermedium, über das Ende oder "End-On" gepumpt, so daß eine optimale Überlappung von aktivem Volumen und Modenvolumen ermöglicht wird. Wenn für ein solches Pumpen Diodenlaser bzw. Diodenlaser-Arrays oder -Feldanordnungen verwendet werden, wird die von Natur aus asymmetrische Strahlung der Diodenlaser so geformt, daß sie auf einen kreisförmigen Fleck fokussiert werden kann. Die homogenisierte Strahlung wird dann durch das Ende ins Festkörpermedium eingekoppelt, wie dies auch in Figur 19 der Zeichnungen dargestellt ist. Falls der Resonator so konzipiert wird, daß der Modendurchmesser etwa dem Pumpfleckdurchmesser entspricht, kann der Laser effizient bei einer hohen Strahlqualität betrieben werden.

Ein Problem, das beim End-On-Pumpen gegeben ist, ist dasjenige, daß eine relativ aufwendige Strahlformungsanordnung erforderlich ist, um die Pumpstrahlung zu fokussieren, und daß durch das begrenzte Pumpvolumen die erreichbare Laserleistung begrenzt wird.

Um die Laserleistung zu höheren Leistungen zu skalieren, werden daher seitlich bzw. transversal gepumpte Anordnungen verwendet. Eine solche Anordnung ist in Figur 20 dargestellt. Eine solche Einkopplung der Pumpstrahlung wird als "Closed Coupling" (dichtes Einkoppeln) in der Fachsprache bezeichnet und ist durch ihren einfachen Aufbau gekennzeichnet. Allerdings wird die erreichbare Laserleistung pro Länge, insbesondere für gepulste Laser, eingeschränkt, da nur begrenzte Pumpleistung bei dieser Anordnung zur Verfügung gestellt werden kann und für diese Anordnung eine hohe Fertigungsgenauigkeit in Bezug auf die relative Position der Diodenlaserbärren zu den zu pumpenden Stäben erforderlich ist, da ansonsten ein großer Teil der Diodenstrahlung aufgrund der großen Divergenzwinkel nicht in das Verstärkungsmedium eingekoppelt werden kann.

Weitere Anordnungen zum Pumpen von Festkörpern nach dem Stand der Technik sind in den Figuren 20 bis 22 dargestellt. Gemäß diesen Anordnungen werden die hoch divergenten Diodenlaserstrahlungen mittels Zylinderlinsen oder elliptischen Zylinderspiegeln in das Festkörpermedium eingekoppelt. In diesen Anordnungen kann die Gain- bzw. Verstärkungs-Verteilung je nach Anwendung durch die unterschiedliche Fokussierung optimiert werden, jedoch sind Fokussierungskomponenten erforderlich, die die Baukosten der Anordnungen wesentlich erhöhen.

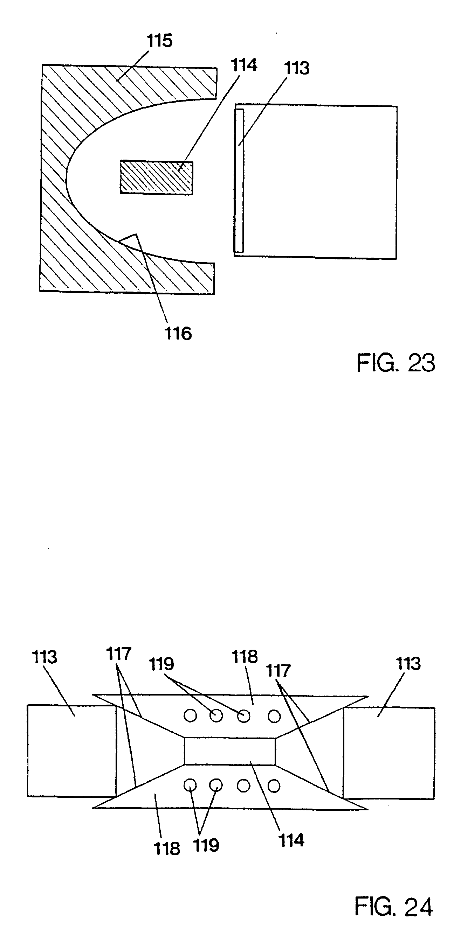

Die vorstehend erwähnten Pumpanordnungen werden für Verstärkungsmedien, das heißt in Bezug auf Festkörperlaser die Festkörpermedien, in Form von Stabgeometrien eingesetzt. Allerdings können ähnliche Pumpanordnungen auch für Verstärkungsmedien bzw. Festkörpermedien mit sogenannter "Slab-Geometrie" bzw. Platten-Geometrie eingesetzt werden. Zwei Beispiele von Anordnungen, die bevorzugt in Verbindung mit plattenförmigen Verstärkungsmedien verwendbar sind, sind in den Figuren 23 und 24 der Zeichnungen schematisch dargestellt. Bei der in Figur 23 dargestellten Pumpanordnung wird die Strahlung des Diodenlaserstapels mittels eines sogenannten nicht abbildenden Konzentrator, im Englischen als "nonimagingconcentrator" bezeichnet, der eine parabolische Reflexionsfläche aufweist, in das Verstärkungsmedium eingekoppelt. Mit einer solchen Anordnung ist es allerdings schwierig, das Verstärkungsmedium gleichmäßig, d.h. homogen, von allen Seiten zu beleuchten. Eine diesbezügliche Optimierung wird mit der Anordnung der Figur 24 erzielt, mit der Diodenlaserstrahlung durch die beiden schmalen Seiten in das plattenförmige Verstärkungs- bzw. Festkörpermedium eingekoppelt wird. Allerdings ist es auch hier schwierig, eine homogene Ausleuchtung bzw. Bestrahlung des plattenförmigen Festkörpermediums und damit eine homogene Pumpverteilung innerhalb des Festkörpermediums zu erzielen.

Eine Gemeinsamkeit der vorstehend beschriebenen Anordnungen ist, daß das Verstärkungsmedium (Festkörpermedium) vollvolumig mittels der Pumpstrahlung (Diodenlaserstrahlung) gepumpt wird. Dadurch bedingt entsteht ein Verstärkungs-Profil, das durch die Dimensionierung des Verstärkungsmediums in allen Richtungen klar definiert ist. Es ist allerdings grundsätzlich nicht möglich, daß ein solches klar eingegrenztes Verstärkungs-Profil durch den Lasermode vollständig überdeckt wird, was jedoch für einen effizienten Laserbetrieb und eine hohe Strahlqualität der Nutzstrahlung Voraussetzung ist. Weiterhin können die Abmessungen eines Festkörpermediums, das mit Diodenlaserstrahlung gepumpt wird, aufgrund des bestimmten Absorptionskoeffizienten von Diodenlaserstrahlung nicht beliebig klein gehalten werden Daber muß, um den Laser mit einer hohen Strahlqualität zu betreiben, das Lasermodenvolumen entsprechend groß gewählt werden, was wiederum zu einer Resonatorlänge führt, die technisch schwierig zu beherrschen ist. Nicht zuletzt wird die erzielbare Ausgangsleistung mit einer annehmbaren Strahlqualität durch thermisch bedingte Störungen, wie beispielsweise Doppelbrechung und thermische Linse, begrenzt.

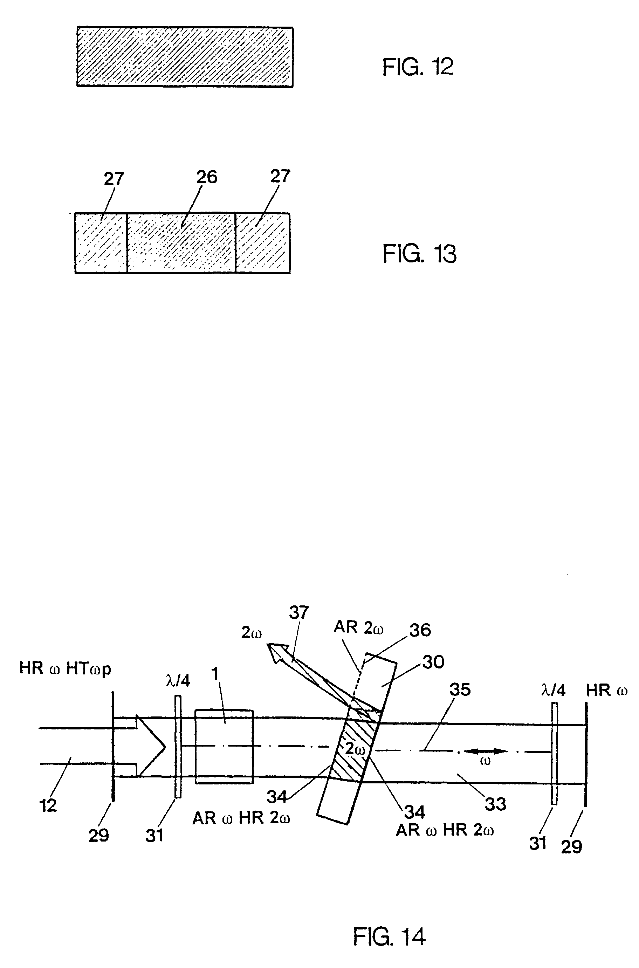

Aus der GB-A-2 215 906 ist eine Laseranordnung bekannt, bei der ein slabförmiges Lasermedium verwendet wird. Das Lasermedium wird transversal mit Diodenlasern gepumpt. Zur Erhöhung der Pumpeffizienz und zur Homogenisierung der Pumpverteilung über den Querschnitt des Mediums wird ein zylinderförmiger Reflektor verwendet. Für den Fall, daß der Hauptstrahl der Pumpstrahlung durch die Achse des Lasermediums läuft, entsteht im Lasermedium ein partiell gepumptes Volumen, das auch einen quasi rechteckigen Querschnitt haben kann. Allerdings wird dieser Querschnitt, auch wenn er in den Figuren dargestellt ist, als nachteilig in der Beschreibung angegeben, wie dies im dem Beschreibungstext Seite 15, Absatz 2, aufgeführt ist. Aus diesem Grund wird letztendlich gemäß dieser Druckschrift auch eine exzentrische Anordnung angegeben, wie dies auf Seite 15, Absatz 3 der Beschreibung sowie den Figuren 10 und 11 zu entnehmen ist.

Weiterhin beschreibt die DE-A-44 02 658 beschreibt eine Laseranordnung, bei der das Lasermedium ein slabförmiges Kristall ist, Das Laserkristall wird transversal mit einem Diodenlaserarry gepumpt. Das Diodenlaserarray wird entlang des Laserkristalls angeordnet und dessen Strahlung durch Optiken so geformt, daß entlang der Achse des Laserkristalls ein Intensitätsmuster zur Minimierung thermischer Effekte erzeugt wird.

Die US-A-5 485 482 bezieht sich auf Laseranordnungen, bei denen ein slabförmiges, aktives Medium verwendet wird, das mit einer Diodenlaseranordnung transversal gepumpt wird, Das transversal gepumpte, aktive Medium kann hierbei einen rechteckigen Querschnitt aufweisen. Das gepumpte, aktive Medium wird so ausgelegt, daß der Grundmode des verwendeten, stabilen Resonators durch sogenanntes Gain Guiding selektiert wird. Dies bedeutet, daß die Querdimension des gepumpten Volumens vergleichbar mit dem Modenradius des verwendeten stabilen Resonators ist.

Ausgehend von dem vorstehend angegebenen Stand der Technik und der damit verbundenen Problematik liegt der vorliegenden Erfindung die Aufgabe zugrunde, einen optischen Verstärker zu schaffen, bei dem möglich ist, eine optimale Überdekkung des gepumpten Volumens durch das Modenvolumen zu erreichen und gleichzeitig die thermische Degradation, die thermische Aberration und den Depolarisationsverlust zu minimieren.

Diese Aufgabe wird in Bezug auf optisch gepumpte Verstärker, wie sie aus der GB-A-2 215 906 bekannt sind, dadurch gelöst, daß das Verhältnis der Breite zur Höhe des rechteckigen Querschnitts des gepumpten Volumens größer 1,8 beträgt.

Es werden, durch geeignete Kopplungsanordnungen, nur definiert partielle Volumen des Verstärkungsmediums, beispielsweise des Festkörpermediums, mittels Pumpstrahlung, vorzugsweise in Verbindung mit Festkörper-Verstärkern mittels Diodenlaserstrahlung, mit einem etwa rechteckigen Querschnitt angestrebt. Dadurch, daß ein definiert rechteckiger Querschnitt des Verstärkungsmediums gepumpt wird, und zwar unabhängig von seiner eigentlichen Querschnittsform, die beispielsweise auch kreisförmig sein kann, wird erreicht, daß eine optimale Überdeckung insbesondere in Verbindung mit einem Off-Axis-, instabilen Resonator hinsichtlich der Strahlqualität Effizienz möglich ist und daß eine quasi-eindimensionale Wärmeleitung vorliegt und damit ein minimaler Depolarisationsverlust.

Das Verhältnis der Breite zur Höhe des rechteckigen Querschnitts des gepumpten Volumens größer soll größer als 1,8 betragen, so daß ein längliches Querschnittsvolumen in dem Verstärkungsmedium gepumpt wird. Hierdurch wird, im Gegensatz zu einem im Querschnitt quadratischen, gepumpten Volumen, der Vorteil erzielt, daß eine quasi-eindimensionale Wärmeleitung und ein damit verbundener minimaler Depolarisationsverlust vorliegen

Unter Verstärkungsmedium im Sinne der Beschreibung ist ein Medium zu verstehen, das mittels Pumpstrahlung anregbare Atome, Moleküle, lone oder Eximer enthält. Der Begriff Verstärkungsmedium wird auch dann in der Beschreibung verwendet wenn nur partiell gepumpt bzw. angeregt wird.

Aufgrund der kleinen Dimension in Bezug auf die Höhe des gepumpten Volumens wird eine geringe thermische Linsenwirkung mit den erfindungsgemäßen Maßnahmen erzielt. Weiterhin treten nur äußerst geringe Depolarisatlonsverluste auf, da hierbei eine quasi-eindimensionale Wärmeleitung vorliegt. Durch die definierte, rechteckige Volumenanregung mit Pumpstrahlung kann Einfluß auf die Strahlqualität genommen werden, indem die Höhe des Querschnitts des gepumpten Volumens so ausgelegt wird, daß sie sich der Dimension des Grundmodes (Grundmodedurchmesser) nähert, woraus sich weiterhin ein hoher, erzielbarer Wirkungsgrad ergibt. Diese Vorteile sind insbesondere in Bezug auf Festkörper, die als Verstärkungsmedien verwendet werden, anzuführen, darüberhinaus auch gerade dann, wenn solche Festkörpermedien mit Diodenstrahlung gepumpt werden, da gerade in Verbindung mit Festkörpermedien die erfindungsgemäßen Maßnahmen solche Pumpgeometrien relativ einfach und effizient realisiert werden können.

Bevorzugt wird das Verhältnis der maximalen zu der minimalen Querschnittsbreite des gepumpten Volumens des Verstärkungsmediums, und zwar senkrecht zur optischen Achse des Verstärkungsmediums gesehen, so eingestellt, daß es kleiner als 1,5 beträgt. Dies bedeutet, daß die Schwankungsbreite der optisch gepumpten Zone in dem Verstärkungsmedium, beispielsweise durch eine oder mehrere Einschnürungen, in definiert geringen Grenzen gehalten wird, in dem Verstärkungsmedium.

Ein Annähern des gepumpten Volumens an einen rechteckigen Querschnitt kann dadurch vereinfacht werden, daß das Verstärkungsmedium von zwei gegenüberliegenden Seiten, und zwar annähernd senkrecht zur optischen Achse, gepumpt wird (transversales Pumpen). Eine weitere Optimierung zur Anregung eines annähernd rechteckigen Querschnittvolumens mittels optischer Pumpstrahlung kann dann erreicht werden, wenn das Verstärkungsmedium von zwei gegenüberliegenden Seiten annähernd parallel zur optischen Achse gepumpt wird (axiales Pumpen); hierdurch kann ein annähernd ideal rechteckig gepumptes Volumen realisiert werden.

Wie bereits vorstehend erwähnt ist, bieten die erfindungsgemäßen Maßnahmen insbesondere Vorteile in Verbindung mit Verstärkern, bei denen das Verstärkungsmedium ein Festkörpermedium ist. In Verbindung mit solchen Festkörpermedien kann dieses in verschiedene Zonen unterteilt werden, die unterschiedlich dotiert sind. Diese Zonen können sowohl entlang der optischen Achse gebildet werden, allerdings auch senkrecht dazu. Mit der unterschiedlichen Dotierung in Richtung der optischen Achse kann bei axialem Pumpen die Pumpleistungsdichte kontrolliert werden. Mit einer sich ändernden Dotierung in Richtung senkrecht zur optischen Achse kann das Gain-Profil den Anforderungen angepaßt werden. Vorzugsweise nimmt die Dotierung von Zone zu Zone zu der Pumpquelie hin ab, da dadurch ein homogenes Pumpen entlang der Pumpstrahlrichtung erzielt werden kann.

In Verbindung mit einem Festkörpermedium als Verstärkungsmedium wird das optische Pumpen bevorzugt schichtweise vorgenommen. Hierzu wird das Verstärkungsmedium in fiktive, geschichtete Abschnitte, vorzugsweise parallel zur optischen Achse, unterteilt, die dann mit unterschiedlicher Pumpstrahlung gepumpt werden. Hierdurch wird die Pumpleistung und somit die Laserleistung pro Länge erhöht.

Falls das Festkörpermedium, zum Beispiel in Bezug auf eine Schichtung, wie sie vorstehend angegeben ist, unterteilt wird, kann es nützlich sein, zwischen jeweils zwei Festkörpermedien eine Kühleinrichtung einzufügen, um Wärme abzuführen, und somit kann die erzielbare Leistung pro Länge weiter gesteigert werden.

Als Pumpquelle der Pumpanordnung, mit der das Verstärkungsmedium optische gepumpt wird, werden bevorzugt Diodenlaser oder Diodenlaseranordnungen eingesetzt. Diese Dioden oder Diodenlaseranordnungen können kompakt aufgebaut und in sehr unterschiedlichen Konfigurationen gestapelt werden, so daß das Volumen des Verstärkungsmediums definiert, insbesondere im Hinblick auf die vorstehend angegebenen, bevorzugten Ausführungsformen, bei denen das Volumen des Verstärkungsmediums in Zonen unterteilt wird, gepumpt werden kann. Da Diodenlaser bzw. Diodenlaserbarren einen elliptischen, sich stark aufweitenden bzw. divergierenden Strahlquerschnitt aufweisen, wird vorzugsweise die Pumpstrahlung eines Diodenlaserbarrens, der zum Pumpen eingesetzt wird, mittels Zylinderlinse linienförmig kollimiert und/oder fokussiert und definiert mit einem eng begrenzten Pumpstrahlungsquerschnitt in das Verstärkungsmedium eingekoppelt. Um Pumpstrahlung einer hohen Leistung, die von einer Vielzahl von Diodenlasem abgegeben wird, in ein sehr schmales, definiertes Volumen des Verstärkungsmediums einkoppeln zu können, werden mehrere Diodenlaserbarren, die ein quasi-linienförmiges Strahlungsfeld abgeben, zu einer Feldanordnung zusammengefaßt, wobei das Strahlungsfeld jedes einzelnen Diodenlaserbarrens über eine diesem Barren zugeordnete Zylinderlinse kollimiert wird; die einzelnen, kollimierten Strahlungsfelder werden dann einer weiteren, fokussierenden Zylinderlinse zugeführt, von der aus das gesamte Strahlungsfeld in das Verstärkungsmedium eingekoppelt wird.

Alternativ kann zunächst die Pumpstrahlung mit einer geeigneten optischen Anordnung in einen oder mehrere Lichtwellenleiter eingekoppelt werden. Die aus dem Lichtwellenleiter austretende Pumpstrahlung kann dann durch eine weitere optische Anordnung in einen Bereich des Verstärkungsmediums eingekoppelt werden.

Um langgestreckte Verstärkungsmedien optisch mittels Diodenlaserbarren zu pumpen, werden mehrere Diodenlaserbarren nebeneinander, und zwar in Richtung der optischen Achse gesehen, angeordnet. Eine solche Unterteilung hat den Vorteil, daß die Laserleistung praktisch beliebig skaliert werden kann.

Zum optischen Pumpen können anstatt Diodenlaser andere Strahlquellen, wie Festkörperlaser, Excimerlaser und/oder lonenlaser, als Pumpquellen der Pumpanordnung eingesetzt werden.

Um mit dem erfindungsgemäßen Verstärker einen Laser aufzubauen, wird das Verstärkungsmedium innerhalb eines Resonators angeordnet. Besondere Vorteile in Bezug auf eine solche Laser-Anordnung werden dann erzielt, wenn der Resonator so ausgelegt wird, daß in der Breite des gepumpten Volumens ein Off-Axis-, instabiler Resonator gebildet wird und in der Höhe des gepumpten Volumens ein stabiler Resonator gebildet wird. Gerade in Verbindung mit dieser Resonatoranordnung ergeben sich mit den erfindungsgemäßen Maßnahmen Vorteile dahingehend, daß die höchste Strahlqualität (auch beugungsbegrenzte Strahlqualität) bei einer hohen Effizienz erzielt werden kann.

Da in Verbindung mit einem stabilen Resonator die Strahlqualität über den (die) Querschnitt(e) der aus dem Resonator austretenden Strahlung eine gewisse Inhomogenität in beiden Richtungen aufweisen kann, wird die aus dem Resonator austretende Strahlung durch eine optische Anordnung homogenisiert. Eine solche optische Anordnung kann beispielsweise aus zwei treppenartigen Spiegeln aufgebaut werden.

Falls es erforderlich ist, wird die aus dem Verstärkungsmedium austretende Strahlung mittels eines etalonförmigen, nicht-linearen Mediums konvertiert. In Verbindung mit einer Laseranordnung kann das etalonförmige Medium bzw. Bauteil innerhalb oder außerhalb des Resonators angeordnet werden.

Eine weitere Ausführungsform, in Verbindung mit der die erfindungsgemäße Pumpanordnung eingesetzt werden kann, ist diejenige, daß das Festkörpermedium in Form eines Lichtwellenleiters gebildet wird, der in einer vorteilhaften Ausführung einen dotierten Kern, bevorzugt mit einem rechteckigen Querschnitt, aufweist. Mit dieser Anordnung, gerade aufgrund der unterschiedlichen Dotierung zwischen Kern und Mantel, kann ein äußerst kompakter und störungsfester Laser realisiert werden.

In einer solchen Anordnung wird bevorzugt die Pumpstrahlung in mindestens ein stimseitiges Ende des Mantels und des Kerns eingekoppelt und innerhalb des Mantels geführt. Ein solcher Lichtwellenleiter kann typischerweise 1 m lang sein und einen Durchmesser im Bereich von 5 µm bis zu etwa einem Millimeter aufweisen. Mit einem solchen Lichtwellenleiter, wie er vorstehend angegeben ist, kann ein Laserresonator aufgebaut werden, indem die Resonatorspiegel auf den beiden Stirnflächen des Lichtwellenleiters angeordnet sind. Ein solcher Laser zeichnet sich dadurch aus, daß die große Oberfläche einen effektiven Abtransport von Verlustwärme gewährleistet.

Ein Lichtwellenleiter besitzt weiterhin den Vorteil, daß über die große Oberfläche eines entsprechend langen Lichtwellenleiters die entstehende Verlustwärme nach außen über die Manteloberfläche abgeführt werden kann. Hierzu wird entweder der Lichtwellenleiter auf einer Kühlplatte montiert und mit der Kühlplatte thermisch kontaktiert; eine andere Möglichkeit besteht darin, den Lichtwellenleiter in einer Kühlkammer anzuordnen. Eine solche Kühlkammer kann dadurch gebildet werden, daß um den Lichtwellenleiter herum ein Schlauch angeordnet ist, so daß zwischen Lichtwellenleiter und Schlauch ein Freiraum verbleibt, durch den ein zirkulierendes Fluid, beispielsweise ein Kühlmittel, geführt werden kann; der Kühlmantel und/oder das Kühlmedium können eine wellenleitende Funktion für die Pumpstrahlung übernehmen.

Das Verstärkungsmedium sollte dann, wenn eine lange Pumplänge in der Pumpstrahlrichtung erreicht werden soll, insbesondere für den Fall eines axialen Pumpens, mit Strahlung gepumpt werden, deren Wellenlänge mindestens einem Teil der schwachen Absorptionslinien des Mediums entspricht. In Verbindung mit einem Festkörpermedium, das mittels Neodym dotiert ist, wird dieses mit einer Pumpstrahlung gepumpt, deren Wellenlänge etwa 870 nm beträgt. Durch diese Kombination ergibt sich eine hoch effiziente, lange Pumpstrecke in Richtung des optischen Resonators, wodurch eventuelle parasitären Schwingungen unterdrückt werden können.

Weitere Einzelheiten und Merkmale der Erfindung ergeben sich aus der nachfolgenden Beschreibung von spezifischen Ausführungsbeispielen anhand der Zeichnungen. In den Zeichnungen zeigen
- Figur 1: eine erste Ausführungsform der Erfindung, die eine Laseranordnung zeigt, die mit Diodenlasem gepumpt wird,
- Figur 2: eine der Figur 1 entsprechende Anordnung, bei der zur Leistungsskalierung eine Vielzahl Diodenlaseranordnungen entlang der optischen Achse des Verstärkungsmediums verteilt angeordnet sind,
- Figur 3: eine schematische Darstellung eines Festkörpermediums, bei dem die über eine Diodenlaseranordnung abgegebene Pumpstrahlung mittels zylindrischer Linse kollimiert wird,
- Figur 4: in einer perspektivischen Ansicht das Festkörpermedium, wie es die Figur 3 zeigt, wobei das gepumpte Volumen in seiner räumlichen Erstrekkung gezeigt ist,
- Figur 5: eine der Figur 3 entsprechende Anordnung, bei der allerdings das Festkörpermedium über zwei Enden, in Richtung der optischen Achse gesehen, mit Diodenlasem gepumpt wird,
- Figur 6 und Figur 7: zwei Anordnungen, bei denen mehrere Anordnungen, wie sie beispielsweise in Figur 3 dargestellt ist, zusammengefaßt bzw. gestapelt sind,
- Figur 8: eine perspektivische, schematische Darstellung, die eine Ausführungsform zum Kollimieren und Einkoppeln von Diodenlaserstrahlung, die von mehreren übereinandergestapeiten Laserdiodenbarren erzeugt wird, in ein Festkörpermedium zeigt,
- Figur 9: schematisch einen sogenannten Hybrid-Resonator gemäß einer weiteren Ausführungsform der Erfindung,
- Figur 10: schematisch einen weiteren Hybrid-Resonator, insbesondere für eine Anordnung in Verbindung mit Figur 6,
- Figur 11: eine Anordnung zum Einkoppeln des zum Beispiel mit der Anordnung in Figur 10 erzeugten Strahlquerschnitts in eine optische Faser,
- Figur 12: schematisch den Querschnitt eines monolithischen, plattenförmigen Festkörpermediums,
- Figur 13: einen gegenüber der Figur 12 sandwichartigen Aufbau des Festkörpermediums mit unterschiedlich dotierten Zonen,
- Fgur 14: eine Laseranordnung, bei der die fundamentale Frequenz mittels eines nicht-linearen Kristalls, in Verbindung mit einem stabilen Resonator, verdoppelt wird,
- Figur 15: eine Anordnung, die im Grundaufbau der Anordnung der Figur 2 entspricht, wobei zusätzlich gestapelte Diodenlaseranordnungen in der Form eingesetzt werden, wie sie in Figur 9 schematisch dargestellt sind,
- Figur 16: einen Querschnitt durch das Festkörpermedium der Figur 15 in Form einer monolithischen Platte, wie diese schematisch auch in Figur 13 dargestellt ist, wobei für diesen Fall das angeregte Volumen dargestellt ist,
- Figur 17: einen weiteren Querschnitt durch das Festkörpermedium der Figur 16, falls eine sandwichartig aufgebaute Platte mit einer Dotierung, vergleichbar mit der Ausführungsform der Figur 13, eingesetzt wird,
- Figur 18: schematisch eine Verstärkeranordnung, die in Form einer Faser bzw. eines Lichtwellenleiters ausgebildet ist, wobei der Querschnitt des Lichtwellenleiters schematisch an einem Ende vergrößert dargestellt ist,
- Figuren 19 bis 24: verschiedene Anordnungen, die herkömmliche Anordnungen verschiedener Verstärkungsanordnungen zeigen, die optisch gepumpt werden.

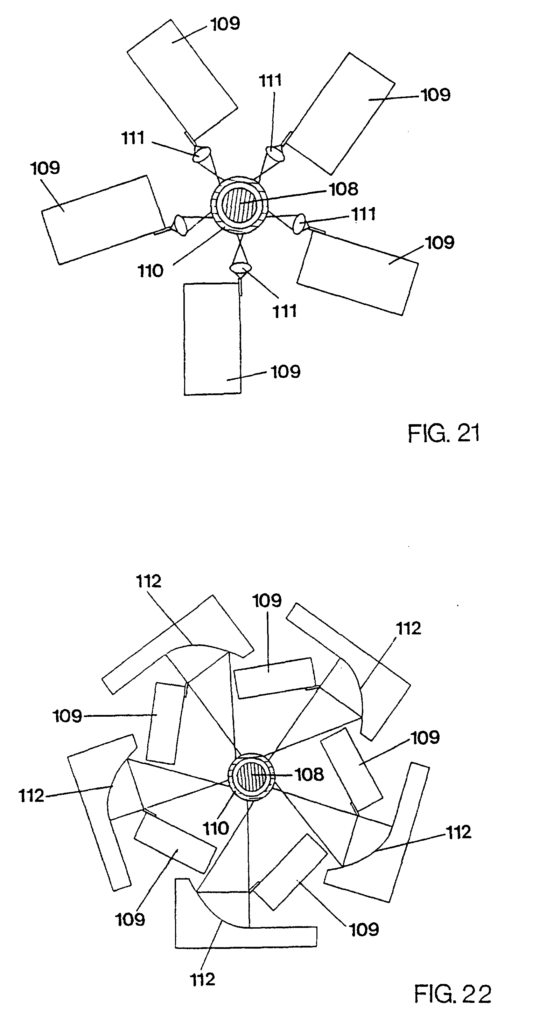

Zunächst werden einige bekannte Anordnungen anhand der Figuren 21 bis 24 kurz beschrieben, die bereits in der Beschreibungseinleitung unter Bezugnahme auf diese Figuren erwähnt wurden.

In Figur 19 ist eine Anordnung dargestellt, bei der ein Festkörpermedium 101 mittels Diodenlaser 102 gepumpt wird, wobei die Diodenlaserstrahlung 104 über eine Strahlformungs- und Fokussierungsanordnung 103 in das stimseitige Ende 105 in einen annähernd kreisförmigen Fleck fokussiert in den Festkörper 101 eingekoppelt wird. In der Anordnung der Figur 19 ist die Achse des zylinderförmigen Festkörpers 101 als strichpunktierte Linie dargestellt und mit 106 bezeichnet. Mit einer solchen Anordnung kann in dem Festkörpermedium 101 ein angeregtes, aktives Volumen erreicht werden, wie es in der rechten Querschnittsdarstellung der Figur 19 schraffiert dargestellt und mit 107 bezeichnet ist.

Während die Figur 19 eine Anordnung darstellt, bei der "End-On" gepumpt wird, zeigt die Figur 20 schematisch eine Anordnung, bei der die Pumpstrahlung, die von mehreren, um den Umfang des Festkörpermediums 108 verteilten Diodenlaseranordnungen 109 eingekoppelt wird. Der Festkörper 108 ist zusätzlich von einem für die Laserstrahlung transparenten Hüllrohr 110 mit Abstand umgeben, so daß ein zusätzlicher Ringraum zum Abtransport der entstehenden Verlustwärme gebildet ist.

Um gegenüber der Anordnung, wie sie in Figur 20 dargestellt ist, eine höhere Pumpleistung in das Festkörpermedium 108 einkoppeln zu können, wird die hoch divergente Diodenlaserstrahlung mittels Zylinderlinsen 111 (Figur 21) oder elliptischen Zylinderspiegeln 112 (Figur 22) eingekoppelt. Eine Anpassung der Verstärkungsverteilung in dem Festkörpermedium 108 kann durch die unterschiedliche Fokussierun angepaßt und optimiert werden.

In den Figuren 23 und 24 sind zwei verschiedene Anordnungen dargestellt, um Pumpstrahlung, die von Diodenlaserfeldanordnungen 113 abgegeben wird, in ein plattenförmiges Festkörpermedium 114 einzukoppeln. In der Ausführungsform der Figur 23 wird die Diodenlaserstrahlung zum einen unmittelbar in die den Dioden zugewandten Seitenfläche des Festkörpermediums 114 eingestrahlt, während die Einstrahlung in die anderen Flächen des Festkörpermediums 114 über einen nicht abbildenden Konzentrator 115, der eine parabolische Reflexionsfläche 116 besitzt, erfolgt. Eine homogene Ausleuchtung des Festkörpermediums 114 mit Pumpstrahlung ist mit der Anordnung der Figur 23 nicht gegeben.

Gemäß der Anordnung der Figur 24 wird in die beiden Schmalseiten des Festkörpermediums 114 jeweils über einen nicht abbildenden Konzentrator 117 mit entsprechenden Reflexionsflächen, die Strahlung einer Diodenlaserfeldanordnung 113 eingestrahlt, während über die Längsseiten mittels Kühlkörper 118, die gegebenenfalls von Kühlkanälen 119 durchzogen sind, die Verlustwärme abgeführt wird. Mit dieser Anordnung läßt sich allerdings ebenfalls nur bedingt eine homogene Pumpverteilung innerhalb des Festkörpermediums 114 erreichen.

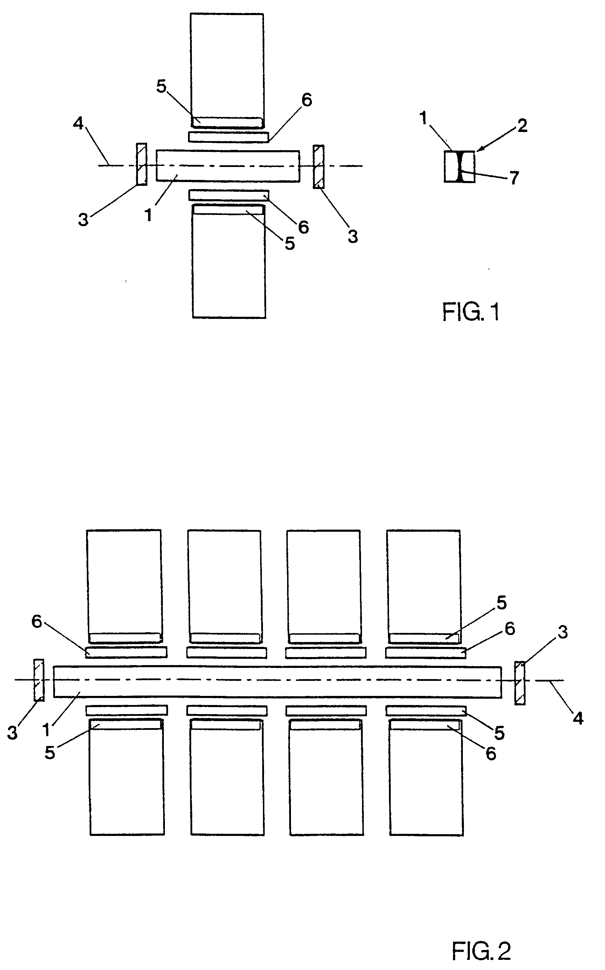

Gemäß der Erfindung wird ein bereitgestelltes Festkörpermedium nur partiell derart gepumpt, daß das gepumpte Volumen des Mediums im Querschnitt senkrecht zur optischen Achse einen annähernd rechteckigen Querschnitt aufweist. Eine schematische Anordnung zum Umsetzen dieses Prinzips ist in Figur 1 in Form eines Festkörperlasers dargestellt. Ein Festkörpermedium, beispielsweise Neodym-YAG-Kristall, das einen rechteckigen bzw. quadratischen Querschnitt 2 besitzt, wie die rechte Querschnittsdarstellung in der Figur 1 zeigt, ist zwischen zwei Resonatorspiegeln 3 angeordnet. Auf zwei gegenüberliegenden Seiten des Festkörpermediums 1 bzw. senkrecht zu der Resonatorachse 4 ist jeweils ein Diodenlaserbarren 5 angeordnet, deren divergente Strahlung über jeweils eine Zylinderlinse 6 senkrecht zu der Resonatorachse 4 in das Festkörpermedium 1 eingestrahlt wird. Die Kollimierung und Fokussierung der Diodenlaserstrahlung erfolgt derart, daß nur ein Teil des Querschnitts 2 ausgeleuchtet wird, so daß ein streifenförmiges Verstärkungsquerschittsprofil erhalten wird. Damit liegt eine eindimensionale Wärmeleitung und somit ein geringer Depolarisationsverlust vor.
Das streifenförmige Verstärkungsquerschnittsprofil 7 sollte bevorzugt ein Verhältnis seiner Breite zur Höhe größer als 1,8 aufweisen; darüberhinaus sollte die Schwankung der Höhe des Verstärkungsquerschnittsprofils 7, d.h. das Verhältnis der maximalen zu der minimalen Querschnittshöhe des gepumpten Volumens des Festkörpermediums 1, kleiner als 1,5 betragen. Dies kann zum Beispiel durch Auslegung der Fokussierungsoptik erreicht werden, indem die doppelte Rayleigh-Länge der fokussierenden Pumpstrahlung etwa der Dimension des Verstärkungsmediums in der Pumpstrahlrichtung entspricht.

Um die Anordnung entsprechend der Figur 1 zu höheren Leistungen hin zu skalieren, werden in Verbindung mit einem entsprechend langen Festkörpermedium 1 entlang der Resonatorachse 4 auf gegenüberliegenden Seiten mehrere Diodenlaserbarren 5 mit jeweils einer zugeordneten Zylinderlinse 6 verteilt, wie dies in Figur 2 dargestellt wird (auf jeder Seite sind vier solche Diodenlaserbarren 5 vorgesehen). Wie anhand der Figur 2 zu erkennen ist, kann durch einen solchen modularartigen Aufbau eine Skalierung zu höheren Leistungen hin erfolgen.

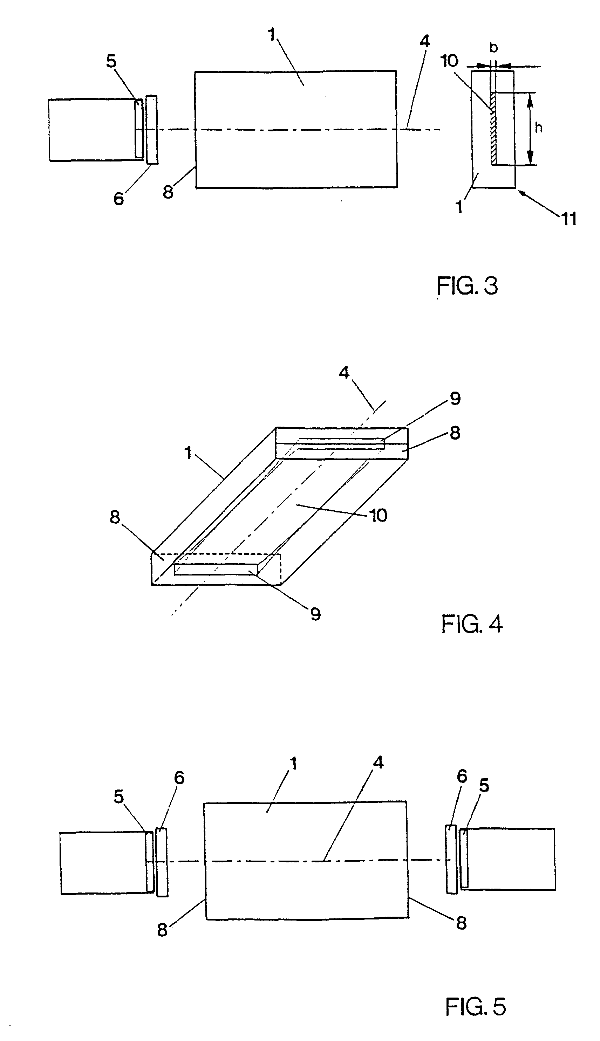

Während bei den Anordnungen gemäß den Figuren 1 und 2 die Pumpstrahlung senkrecht zu der Achse 4 des Festkörpermediums 1 eingekoppelt wird, sind in den Figuren 3 bis 5 schematische Anordnungen dargestellt, gemäß denen die Pumpstrahlung, wiederum durch Diodenlaserbarren 5 abgegeben, über eine entsprechende, dem jeweiligen Diodenfaserbarren 5 zugeordnete Zylinderlinse 6 parallel zur Resonatorachse 4 eingekoppelt wird. In Figur 3 erfolgt die Einkopplung über die linksseitige Stirnfläche 8 des Festkörpermediums, während die Figur 5 eine Anordnung zeigt, bei der, zur Leistungsskalierung, die Einkopplung der Pumpstrahlung über beide Stirnflächen 8 parallel zu der Resonatorachse 4 erfolgt. Das Festkörpermedium 1 wird nur partiell mit Pumpstrahlung ausgeleuchtet, indem nur über einen partiellen, streifenförmigen Bereich 9 der Stirnfläche 8 eingestrahlt wird, wie anhand der Figur 4 zu erkennen ist. Wie weiterhin anhand der Figur 4 zu sehen ist, entsteht ein Pumpvolumen 10, das eine plattenähnliche Form aufweist, wobei der Einschnürungseffekt in der Mitte des Pumpvolumens in Figur 4 übertrieben, d.h. nicht maßstäblich, dargestellt ist. Dagegen zeigt die rechte Querschnittsdarstellung 11 des Festkörpermediums 1 der Figur 3 das idealisierte, angeregte Verstärkungsquerschnittsvolumen 10, in dieser Ausführungsform mit einer Breite b, die etwa dem 10-fachen der Höhe h entspricht, so daß sich das Verhältnis der Breite zur Höhe des rechteckigen Querschnitts des gepumpten Volumens mit etwa 10 ergibt. Die Seitenflächen, durch die keine Pumpstrahlung eingekoppelt wird und/oder durch die keine Laserstrahlung austritt, können unpoliert und/oder absorbierend sein.

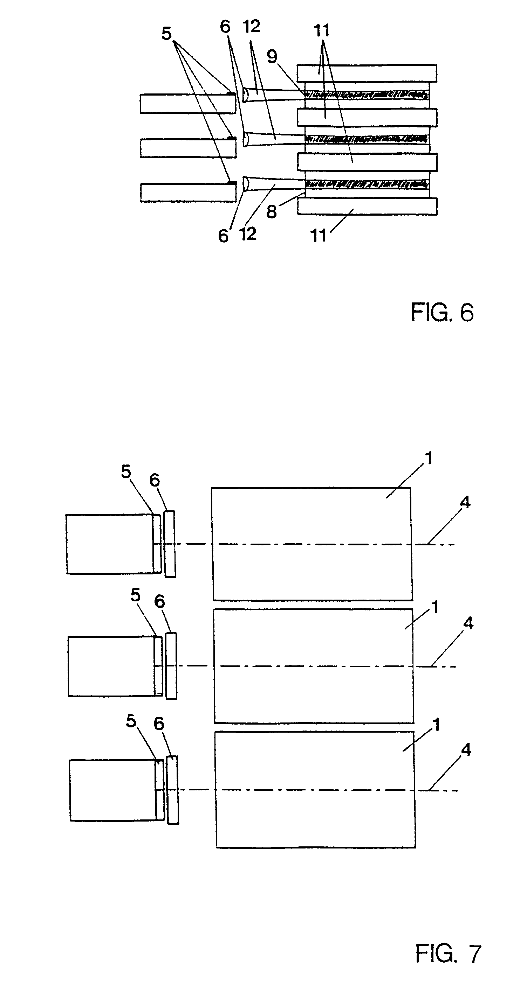

Um eine weitere Steigerung der Laserleistung mit dem erfindungsgemäßen Prinzip zu erzielen, können Anordnungen aufgebaut werden, wie sie in den Figuren 6 und 7 dargestellt sind. In Figur 6 sind mehrere Festkörpermedien 1, jedes entsprechend beispielsweise der Figuren 1 und 3, übereinander unter Zwischenfügung jeweils einer Kühleinheit 11 gestapelt, mit einer zusätzlichen Kühleinheit 11 auf der Außenseite des obersten und untersten Festkörpers 1. Jedem Festkörpermedium 1 ist ein Diodenlaserbarren 5 zugeordnet, dessen Strahlung 12 über jeweils eine Zylinderlinse 6 in das zugeordnete Festkörpermedium 1 partiell eingestrahlt wird. Die Einstrahlquerschnittsfläche 9 in Bezug auf ihre Höhe beträgt etwa ein Drittel der Höhe der Stirnfläche 8 des Festkörpermediums. Entsprechend der Darstellung der Figuren 3 und 4 wird ein plattenförmiges Pumpvolumen 10 in den jeweiligen Festkörpern 1 erzeugt. Die gepumpte Strahlung kann, obwohl dies nicht in Figur 6 dargestellt ist, aus den Festkörpern über entsprechende Austrittsfenster 9, oder die Seitenflächen, ausgekoppelt werden und mittels einer geeigneten optischen Anordnung, wie Facettenspiegel, zu einem Strahl zusammengefaßt werden.

Die Anordnung der Figur 7 zeigt drei Pumpanordnungen mit jeweils einem Festkörpermedium 1, die mit ihren Achsen 4 parallel zueinander verlaufend ausgerichtet sind. Auch in einem solchen Fall können für die Skalierung zu hohen Leistungen die ausgekoppelten, verstärkten Strahlungsanteile mittels geeigneter Einrichtungen, wie beispielsweise Treppenspiegel, zusammengefaßt werden.

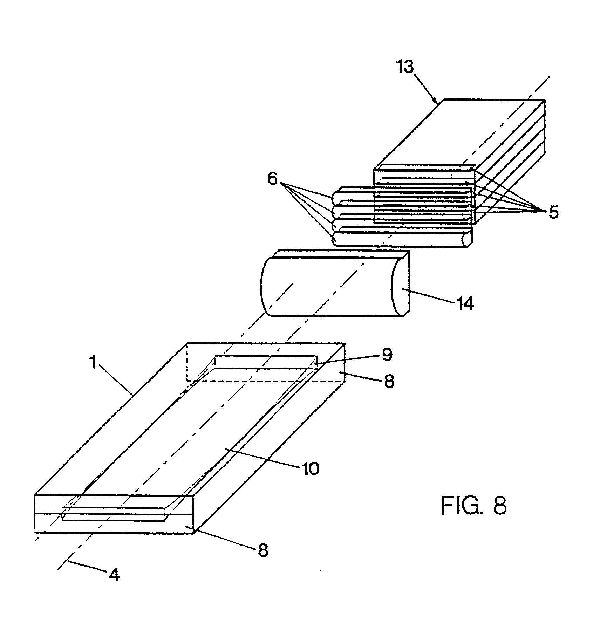

Wie bereits eingangs erwähnt wurde, liegt ein grundsätzliches Problem einer Skalierung von Festkörper-Verstärkern zu höheren Leistungen, die mit Diodenlasern gepumpt werden, darin, ausreichend Diodenlaserstrahlung in den Festkörper einzukoppeln. Hierbei sind die Grenzen insbesondere durch die Diodenlaser selbst gegeben, die üblicherweise einen relativ großen Kühlkörper erfordern, wodurch dementsprechend ein großer Raumbedarf um den Festkörper herum, der gepumpt werden soll, erforderlich ist, wie dies auch anhand der Figuren 21 bis 24 ersichtlich ist. Um dieses Problem zu lösen, werden entsprechend einer Anordnung, die schematisch in Figur 8 dargestellt ist, die in ihrem grundsätzlichen Aufbau der Ausführungsform der Figuren 1 bis 5 entspricht, mehrere Diodenlaserbarren 5 unmittelbar übereinandergestapelt, so daß eine Diodenlaserfeldanordnung bzw. ein Diodenlaserarray 13 entsteht. Jedem Diodenlaserbarren 5 (in Figur 8 sind vier solcher Diodenlaserbarren 5 übereinandergestapelt) ist jeweils eine Zylinderlinse 6 zugeordnet, die nahe zu den Austrittsfenstern der Diodenlaser positioniert sind, um die stark divergierende Diodenlaserstrahlung in der Fast-Richtung zu kollimieren. Die vorkollimierte Strahlung wird dann einer weiteren Zylinderlinse 14 zugeführt, die dann die gesamte von dem Diodenlaserarray 13 abgegebene Strahlung in die Stirnfläche 8 des Festkörpermediums 1 oder Seitenfläche im Bereich einer schmalen, streifenförmigen Einstrahlfläche 9 einkoppelt. Das Diodenlaserarray 13 mit der Strahlformungs- und Führungsoptik in Form der Zylinderlinsen 6 und der weiteren Zylinderlinse 14 kann, entsprechend der schematischen Darstellung der Figur 5, auch der in der Figur 8 unteren Stirnfläche 8 des Festkörpermediums 1 zusätzlich zugeordnet werden, so daß mit einer solchen Anordnung das Festkörpermedium 1 über beide Stirnflächen 8 gepumpt wird. Anstelle eines direkten Pumpens kann die Pumpstrahlung zunächst in einen Lichtwellenleiter eingekoppelt werden. Der Lichtwellenleiter führt in Verbindung mit einer optischen Anordnung die Strahlung zu dem Verstärkungsmedium. Anstelle der Zylinderlinsen 6 sowie der weiteren Zylinderlinsen 14 können Lichtleiter vorgesehen werden, die die Diodenlaserstrahlung, die von dem Diodenlaserarray 13 abgegeben wird, unmittelbar der Einstrahlfläche 9 zuführen und in diese einkoppeln.

Die vorstehend angeführten Pumpanordnungen bzw. Resonatorkonfigurationen sind auch auf andere, optisch gepumpte Verstärker/Laser, wie beispielsweise mit frequenzverdoppelten YAG-Laser gepumpten T-Saphir-Laser, übertragbar. Anstelle des Festkörpermediums kann das Verstärkungsmedium auch ein gasförmiges oder flüssiges Medium sein.

Das gepumpte platten- bzw. slab-förmige Volumen wird durch dessen Abmessungen (Höhe x Breite x Länge) definiert, wobei bevorzugt das Verhältnis von Breite/Höhe > 1,8 ist. Typische Abmessungen liegen im Bereich von einem 1 mm x 10 x 20 mm (Höhe x Breite x Länge). Mit einem solchen End-On-gepumpten aktiven Medium kann eine Ausgangsleistung von einigen hundert Watt erzielt werden; dabei wird aufgrund der partiellen, im Querschnitt rechteckigen Anregung des Volumens des Verstärkungsmediums eine eindimensionale Wärmeleitung im aktiven Medium gewährleistet, was einem minimalen Depolarisationsverlust entspricht.

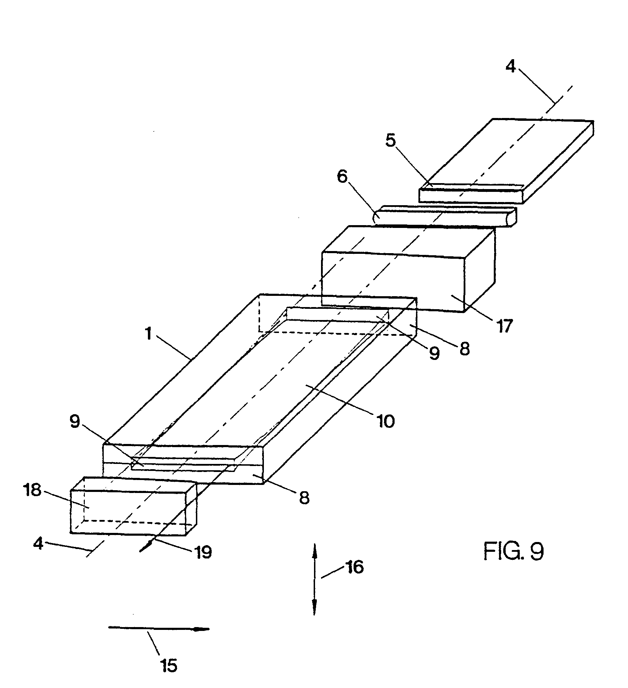

Ein bevorzugter Aufbau einer Resonatorkonfiguration, in Verbindung mit der ein optisch gepumptes, aktives Medium eingesetzt wird, wie es anhand der Figuren 3 und 4 erläutert wurde, ist in Figur 9 dargestellt. Bei dieser Resonator-Konfiguration, die als Hybrid-Resonator bezeichnet werden kann, wird die Resonatoroptik so ausgelegt, daß in der Breitenrichtung, durch den Pfeil 15 angedeutet, ein instabiler Off-Axis-Resonator gebildet ist, und in der Schmalenrichtung, durch den Doppelpfeil 16 in Figur 9 angegeben, ein stabiler Resonator mit "Gain-Guiding", d.h.die Modenselektion erfolgt mindestens teilsweise durch die Dimensionierung der Verstärkung bzw. des Gains, gebildet ist.

Bei einem stabilen Resonator (nicht dargestellt) weist der Ausgangs- bzw. Arbeitsstrahl eventuell unterschiedliche Strahlqualitäten in den beiden Richtungen auf, was wiederum für viele Anwendungen, zum Beispiel für Fasereinkopplungen, nachteilig ist. Um dieses Problem zu umgehen, muß die Strahlqualität in beiden Richtungen homogenisiert werden und der Strahl auf eine etwa kreisförmige Fläche fokussiert werden. Dies kann z.B. durch treppenartige Spiegel erreicht werden.

Die Pumpstrahlung wird wiederum durch einen Diodenlaserbarren 5 bereitgestellt, die durch eine Zylinderlinse 6 kollimiert und in den Festkörper 1, innerhalb zweier Resonatorspiegel 18 positioniert, eingestrahlt wird, wozu der Resonatorspiegel 17 für Pumpstrahlung durchlässig ausgebildet ist. Die Strahlungseinkopplung erfolgt parallel zu der Resonatorachse 4. Der Resonatorspiegel 18 besitzt ein Auskoppelfenster, über das ein Arbeitsstrahl 19, zu der Achse 4 versetzt, ausgekoppelt wird. Die mit einer solchen Laseranordnung erreichbare Strahlqualität ist beugungsbegrenzt, darüberhinaus kann eine optimale Überlappung von gepumptem Volumen und Laservolumen realisiert werden, was eine maximale Effizienz bedeutet.

Die Anordnungen der Figuren 10 und 11 dienen ausschließlich zur Leistungsskalierung mit einer minimalen Anzahl von Resonatorspiegeln.

Während in den vorstehenden Ausführungsformen Festkörper in Form monolithischer Platten eingesetzt wurden, wie dies anhand des Querschnitts der Figur 12 angedeutet ist, kann als Festkörpermedium ein Kristall verwendet werden, das unterschiedlich dotierte Zonen aufweist, wie dies in Figur 13 angedeutet ist. Als Beispiel ist der Querschnitt der Figur 13 in eine Mittelzone 26 und zwei äußere Randzonen 27 aufgeteilt. Die beiden Randzonen werden geringer dotiert, beispielsweise 0,8 % atm bei Nd:YAG, als die Mittelzone 26, beispielsweise 1,1% atm, um eine homogene Pumpleistungsverteilung in der Pumpstrahlrichtung zu erreichen. Aufgrund davon, daß die Pumpleistung stärker in die Mitte, d.h. die Mittelzone 26, transportiert wird, kann eine höhere Homogenität der Pumpleistung erzielt werden, woraus sich wiederum verbesserte, thermo-optische Eigenschaften ergeben. Während der Querschnitt, der in Figur 13 dargestellt ist, nur in drei Zonen unterteilt ist, kann eine gradientenmäßige Dotierungsabstufung mittels einer größeren Anzahl von unterschiedlich dotierten Zonen erfolgen. Weiterhin wird die Richtung der Schichtung der einzelnen, unterschiedlich dotierten Zonen von der Einstrahlrichtung der Pumpstrahlung 28 abhängig gemacht.

Der Einsatz von Laseranordnungen und Laserstrahlquellen in Bezug auf die unterschiedlichen Anwendungen erfordert zum einen eine Skalierung der Laserleistung zum anderen eine Anpassung der Frequenz gemäß den Spezifikationen. Um die Grundwellenstrahlung (ω), die das aktive Medium 1 abgibt, zu verdoppeln, unter Ausnutzung der Leistungsskalierungs- und Homogenisierungsmaßnahme, wie sie anhand der Figuren 1 bis 13 beschrieben ist, wird ein Resonatoraufbau eingesetzt, wie ihn die Figur 14 zeigt. Dieser lineare Resonator besitzt zwei Resonatorendspiegel 29, zwischen denen das aktive Medium, d.h. der Festkörper 1, angeordnet ist. Weiterhin ist zwischen dem aktiven Medium 1 und dem rechtsseitigen Resonatorendspiegel 29 ein Verdoppler-Etalon 30 in dem Strahlengang positioniert. Zusätzlich befindet sich zwischen dem linken Resonatorendspiegel 29 und dem Festkörpermedium 1 eine λ/4-Platte 31 in dem Strahlengang, eine weitere λ/4-Platte 31 ist zwischen dem Etalon 30 und dem rechten Resonatorendspiegel 29 angeordnet. Über den linken Resonatorendspiegel 29 wird mittels Pumpstrahlung 12, bei der es sich bevorzugt um Diodenlaserstrahlung handelt, gepumpt, und zwar derart, daß ein annähernd rechteckiges Volumen des Festkörpermediums 1 gepumpt wird. Das mittels der Pumpstrahlung 12 angeregte, aktive Festkörpermedium 1 gibt Grundwellenstrahlung (ω) 33 ab. Wie in Figur 14 angedeutet ist, ist der linke Resonatorendspiegel 29 für Grundwellenstrahlung (ω) hoch reflektierend, während er für die Pumpstrahlung mit der Frequenz (ωp) hoch transmittierend ist. Ebenso wie der linke Resonatorendspiegel 29 ist der rechte Resonatorendspiegel 29 ebenfalls für die Grundwelle (ω) hoch reflektierend. Das Verdoppler-Etalon 30 ist mit seinen beiden Längsflächen 34 zu der Resonatorachse 35 bzw. der Grundwellenstrahlung (ω) geeignet geneigt. Die beiden Längsflächen 34 sind für die Grundwelle (ω) antireflektierend ausgebildet, so daß diese Grundwellenstrahlung (ω) in das Verdoppler-Etalon 30 eintreten kann, während sie für die zweite Harmonische (2ω) hoch reflektierend sind. Aufgrund dieser reflektierenden Eigenschaften wird die zweite Harmonische (2ω) innerhalb des Verdoppler-Etalons 30 mehrfach reflektiert und tritt an der Oberseite über ein Austrittsfenster 36, das für die zweite Harmonische (2ω) antireflektierend ist, als Arbeitsstrahl 37 (2ω) aus. Durch die beiden λ/4-Platten 31 wird die Polarisation der nach links und rechts laufenden Grundwellen (ω) so gelegt, daß die Polarisationen dieser gegenläufigen nach links und rechts laufenden Grundwellen (ω) senkrecht zueinander stehen. Mit diesen λ/4-Platten 31 kann die Phasenanpassungsbedingung, z.B. nur für die links umlaufende Strahlung, erfüllt werden.

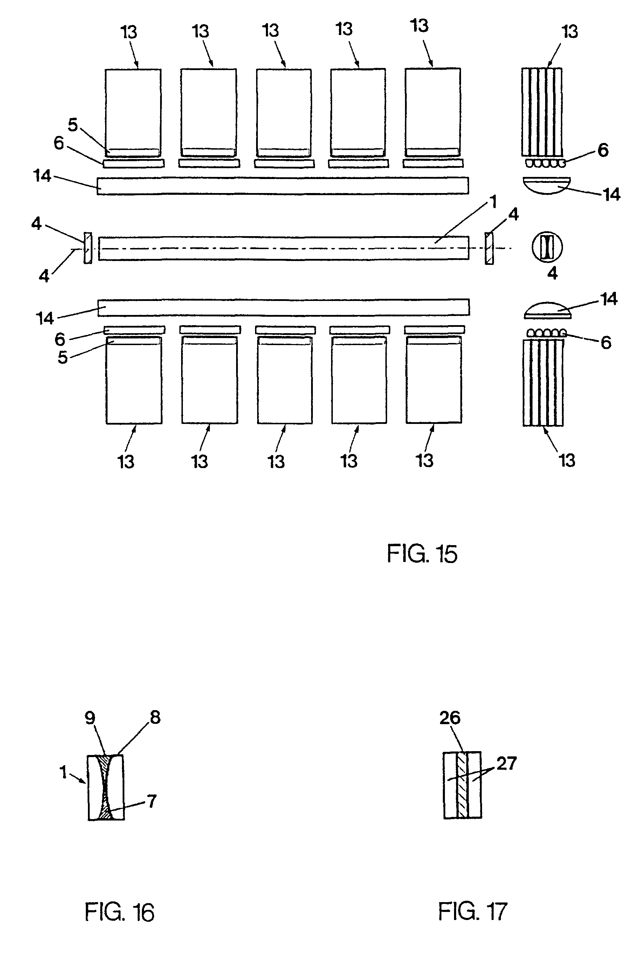

Die Figur 15 stellt einen Aufbau eines Laserresonators dar, der eine Kombination der Prinzipien von Anordnungen zeigt, die für eine weitere Steigerung der Leistung vorgesehen ist. In der Anordnung der Figur 15 kann von Maßnahmen, wie sie anhand der Figur 13 vorstehend erläuternd wurden, ebenfalls Gebrauch gemacht werden, und zwar mit den im Rahmen der Figur 13 beschriebenen Vorteilen, indem der Festkörper sandwichartig in verschiedene Zonen unterteilt wird, wie die Figur 17 zeigt. In Figur 17 bezeichnet das Bezugszeichen 26 die aktive Zone, während die Bezugszeichen 27 nicht aktive Zonen bezeichnen.

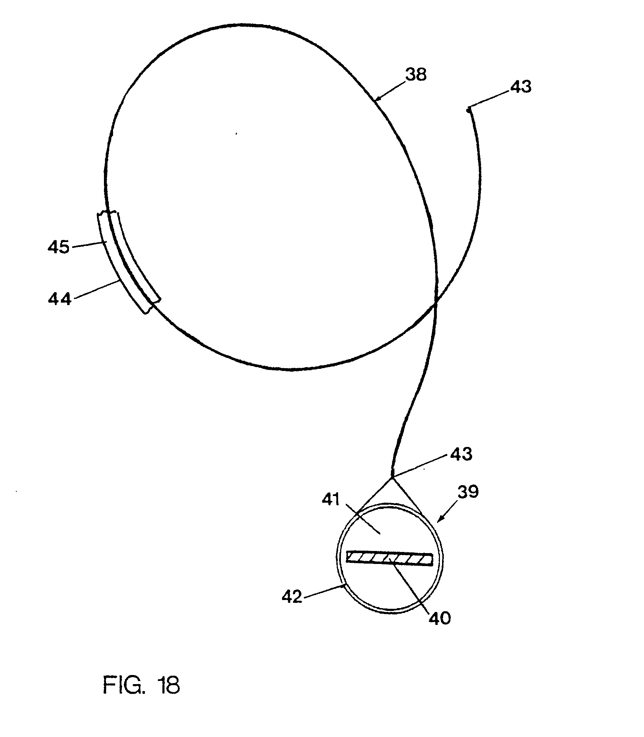

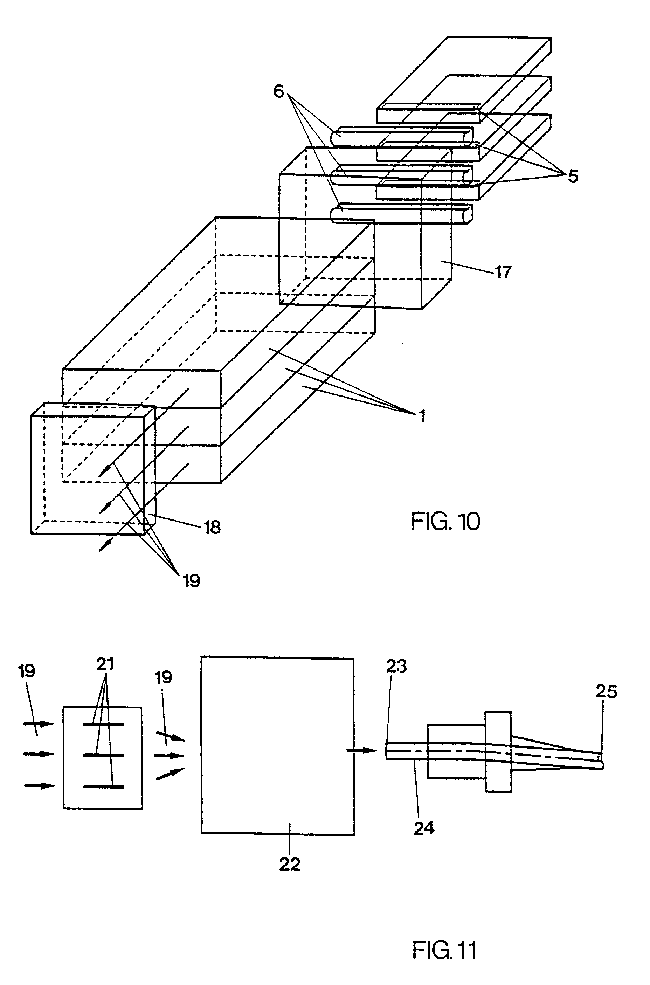

Figur 18 zeigt einen Verstärker/Laser, der als Lichtleitfaser 38 ausgeführt ist. Die Faser besteht im wesentlichen, wie der Querschnitt 39, der vergrößert dargestellt ist, zeigt, aus drei Zonen, und zwar in diesem Beispiel einer aktiven Zone 40 mit rechteckigem Querschnitt, einer Führungszone 41 für die Pumpstrahlung und einem die Führungszone 41 umgebenden Mantel 42. Um die Pumpstrahlung, die bei einem solchen aktiven Medium in Form eines Lichtwellenleiters über die stirnseitigen Enden 43 eingekoppelt wird (Pumpstrahlung erzeugende Anordnungen sind in Figur 17 nicht dargestellt), nimmt der Brechungsindex von der aktiven Zone 40 zu dem Mantel 42 hin ab. Um aus diesem Lichtwellenleiter 38 einen Resonator aufzubauen, können die stirnseitigen Enden 43 beschichtet werden. Zum Beispiel wird das eine Ende für die Laserstrahlung hoch reflektierend beschichtet, während das andere Ende teilreflektierend vergütet wird, um Pumpstrahlung in den Lichtwellenleiter einzukoppeln bzw. Laserstrahlung auszukoppeln. Die Anordnung der Figur 18 hat den Vorteil, daß die große Oberfläche des Lichtwellenleiters 38 dazu ausgenutzt werden kann, die Verlustwärme abzuführen. Hierzu kann der Lichtwellenleiter 38 durch eine schlauchförmige Umhüllung 44, die in Form eines Abschnitts gezeigt ist, umgeben sein derart, daß zwischen dem Lichtwellenleiter 38 und der Umhüllung 44 ein Ringraum 45, gegebenenfalls durch nicht näher dargestellte Abstandshalter, gehalten, gebildet wird, in den ein Kühlfluid, beispielsweise Wasser eingefüllt und gegebenenfalls zirkuliert wird. Ein solcher Kühlmantel kann so ausgeführt werden, daß er eine wellenleitende Funktion übernimmt, wozu das Material des Kühlmantels und/oder die Kühlflüssigkeit in Beziehung auf den Brechungsindex so angepaßt werden, daß der Brechungsindex vom Kern aus nach außen abnimmt und dieser geringer ist als der Brechungsindex der aktiven Zone 40.

Vorzugsweise wird als Material für das aktive Medium 1, wie es in den Figuren 1 bis 16 beschrieben ist, ein Nd:YAG-Kristall verwendet. In einem Wellenlängenbereich um etwa 806 nm weist Nd:YAG ein breites Absorptionsband auf. Um eine hohe Absorptionseffizienz innerhalb eines möglichst kurzen Abstands zu erzielen, wird in Verbindung mit Festkörperlasern, die einen Nd:YAG-Festkörper einsetzen, Diodenlaserstrahlung zum Pumpen verwendet, deren Wellenlänge um etwa 806 nm liegt. Da mit den erfindungsgemäßen Anordnungen eine lange Absorptionsstrecke für die Unterdrückung von parasitären Schwingungen, insbesondere für End-On-gepumpte Ausführungsformen, vorteilhaft ist, können Nd:YAG-Laser optisch bei dem schwachen Absorptionsband um 870 nm, zum Beispiel mittels Diodenlasern, gepumpt werden. Weitere Vorteile bei einem Pumpen in dem Absorptionsband um 870 nm sind diejenigen, daß aufgrund einer geringen Stoke'schen-Verschiebung ein höherer Wirkungsgrad und dadurch geringere thermische Linsen erzielt werden können.

Anhand der Figuren sind beispielhaft verschiedene Ausführungsformen beschrieben worden. Soweit identische Bezugsziffern in den einzelnen Ausführungsformen für ähnliche Bauteile verwendet wurden, können die Ausführungen zu einer Ausführungsform entsprechend auf die andere Ausführungsform analog übertragen werden.

## Patentansprüche

1. Optisch gepumpter Verstärker, insbesondere ein Festkörper-Verstärker, mit einem Verstärkungsmedium und mit einer optischen Pumpanordnung, über die Pumpstrahiung in das Verstärkungsmedium eingekoppelt wird, wobei die Pumpstrahlung vor der Einkopplung geformt wird und das Volumen des Verstärkungsmediums nur partiell gepumpt wird, wobei das gepumpte Volumen des Verstärkungsmediums (1; 38) im Querschnitt (2; 8; 41) senkrecht zur optischen Achse einen annähernd rechteckigen Querschnitt aufweist, wobei das Verhältnis von Breite zu Höhe des annähernd rechteckigen Querschnitts (7; 9; 10; 40) des gepumpten Volumens größer als 1,8 beträgt, und wobei sich das Verstärkungsmedium (1) innerhalb eines Resonators (17; 18; 29) befindet, **dadurch gekennzeichnet, daß** der Resonator so ausgelegt ist, daß in der Breite (15) des gepumpten Volumens ein instabiler Resonator (17, 18) gebildet ist und daß in der Höhe (16) des gepumpten Volumens ein stabiler Resonator (17, 18) gebildet ist.

2. Verstärker nach Anspruch 1, **dadurch gekennzeichnet, daß** das Verhältnis der maximalen zu der minimalen Querschnittsbreite des gepumpten Volumens (7; 9; 10; 40) senkrecht zur optischen Achse des Verstärkungsmediums kleiner als 1,5 beträgt.

3. Verstärker nach Anspruch 1 oder 2, **dadurch gekennzeichnet, daß** das Verstärkungsmedium (1) von zwei gegenüberliegenden Seiten annähernd senkrecht zur optischen Achse (4) gepumpt wird.

4. Verstärker nach einem der Ansprüche 1 bis 3, **dadurch gekennzeichnet, daß** das Verstärkungsmedium (1) von zwei gegenüberliegenden Seiten annähernd parallel zur optischen Achse gepumpt wird.

5. Verstärker nach einem der Ansprüche 1 bis 4, **dadurch gekennzeichnet, daß** das Verstärkungsmedium ein Festkörpermedium (1; 38) ist.

6. Verstärker nach Anspruch 5, **dadurch gekennzeichnet, daß** das Festkörpermedium in verschiedene Zonen (26, 27) unterteilt ist, wobei die Zonen (26, 27) unterschiedlich dotiert sind.

7. Verstärker nach Anspruch 6, **dadurch gekennzeichnet, daß** die Dotierung von Zone zu Zone zu der Pumpquelle hin abnimmt.

8. Verstärker nach einem der Ansprüche 6 bis 7, **dadurch gekennzeichnet, daß** das Festkörpermedium schichtweise gepumpt wird, derart, daß das Verstärkungsmedium mehrere im Querschnitt senkrecht zur optischen Achse annähernd rechteckige, gepumpte Volumen aufweist.

9. Verstärker nach einem der Ansprüche 6 bis 8, **dadurch gekennzeichnet, daß** mindestens zwei Festkörpermedien (1) unter Zwischenfügung einer Kühleinrichtung (11) gestapelt sind.

10. Verstärker nach einem der Ansprüche 1 bis 9, **dadurch gekennzeichnet, daß** die Pumpquelle(n) der Pumpanordnung durch einen oder mehrere Diodenlaser (5, 13) gebildet ist (sind).

11. Verstärker nach Anspruch 10, **dadurch gekennzeichnet, daß** mehrere Diodenlaser einer Pumpquelle zu mindestens einer Linie einen Diodenlaserbarren (5) bildend zusammengefaßt sind.

12. Verstärker nach Anspruch 11, **dadurch gekennzeichnet, daß** die Pumpstrahlung des Diodenlaserbarrens (5) mittels Zylinderlinse (6) linienförmig kollimiert und/oder fokussiert in das Verstärkungsmedium (1; 38) eingekoppelt wird.

13. Verstärker nach Anspruch 12, **dadurch gekennzeichnet, daß** mehrere Diodenlaserbarren (5) übereinander zu einer Feldanordnung zusammengefaßt sind, wobei die Pumpstrahlung, die über die jeweiligen Zylinderlinsen (6) kollimiert ist, einer weiteren, fokussierenden Zylinderlinse (14) zugeführt wird, von der sie dann in das Verstärkungsmedium eingekoppelt wird.

14. Verstärker nach Anspruch 9 oder 13, **dadurch gekennzeichnet, daß** mehrere Diodenlaserbarren (5) nebeneinander angeordnet sind.

15. Verstärker nach einem der Ansprüche 1 bis 11, **dadurch gekennzeichnet, daß** die Pumpstrahlung durch einen oder mehrere Lichtwellenleiter, denen eine Strahlungsformungsoptik nachgeordnet ist, in das Verstärkungsmedium eingekoppelt wird.

16. Verstärker nach einem der Ansprüche 1 bis 15, **dadurch gekennzeichnet, daß** die Pumpquelle(n) der Pumpanordnung durch einen oder mehrere Festkörperlaser, Excimerlaser und/oder lonenlaser gebildet ist (sind).

17. Verstärker nach einem der Ansprüche 1 bis 16, **dadurch gekennzeichnet, daß** der Resonator so ausgelegt ist, daß in der Breite (15) des gepumpten Volumens ein Off-Axis-, instabiler Resonator 817, 18) gebildet ist und daß in der Höhe (16) des gepumpten Volumens ein stabiler Resonator (17, 18) gebildet ist.

18. Verstärker nach Anspruch 1, **dadurch gekennzeichnet, daß** die Strahlqualität über den (die) Querschnitt(e) der aus dem Resonator austretenden Strahlung durch eine optische Anordnung (22) homogenisiert wird.

19. Verstärker nach einem der Ansprüche 1 bis 16, **dadurch gekennzeichnet, daß** die aus dem Resonator (17, 18) austretende Strahlung (19) in einen oder meherere Lichtwellenleiter (24) eingekoppelt wird.

20. Verstärker nach einem der Ansprüche 1 bis 18, **dadurch gekennzeichnet, daß** die aus dem Verstärkungsmedium (1) austretende Strahlung mittels eines etalonförmigen, nicht-linearen Mediums (30) in Bezug auf die Frequenz konvertiert wird.

21. Verstärker nach Anspruch 20, **dadurch gekennzeichnet, daß** das etalonförmige Medium (30) innerhalb des Resonators (29) angeordnet ist.

22. Verstärker nach einem der Ansprüche 1 bis 21, **dadurch gekennzeichnet, daß** das Festkörpermedium in einer Form eines Lichtwellenleiters (38) gebildet ist, der einen dotierten Kern als Verstärkungsmedium aufweist.

23. Verstärker nach Anspruch 22, **dadurch gekennzeichnet, daß** der Kern im Querschnitt mindestens eine rechteckige, dotierte Zone (40) aufweist.

24. Verstärker nach Anspruch 22 oder 23, **dadurch gekennzeichnet, daß** der Lichtwellenleiter auf einem Kühlkörper oder zwischen zwei Kühlkörpern montiert und mit dem/den Kühlkörper(n) thermisch kontaktiert ist.

25. Verstärker nach Anspruch 24, **dadurch gekennzeichnet, daß** in dem/den Kühlkörper(n) Nuten gebildet sind und der Lichtwellenleiter in den Nuten eingebettet ist.

26. Verstärker nach Anspruch 22 oder 23, **dadurch gekennzeichnet, daß** der Lichtwellenleiter (38) in eine Kühlkammer (44) eingelegt ist.

27. Verstärker nach Anspruch 26, **dadurch gekennzeichnet, daß** die Kühlkammer geschlossen ist.

28. Verstärker nach Anspruch 26 oder 27, **dadurch gekennzeichnet, daß** die Kühlkammer mit Kühlmittel gefüllt ist.

29. Verstärker nach Anspruch 22 oder 23, **dadurch gekennzeichnet, daß** der Lichtwellenleiter (38) in einem Schlauch (44) angeordnet ist, wobei zwischen Schlauch (44) und Lichtwellenleiter (38) Kühlmittel eingefüllt ist.

30. Verstärker nach Anspruch 29, **dadurch gekennzeichnet, daß** der Lichtwellenleiter (38) innerhalb des Kühlschlauchs (44) mittels Abstandshalter etwa konzentrisch zum Kühlschlauch gehalten ist.

31. Verstärker nach einem der Ansprüche 28 bis 30, **dadurch gekennzeichnet, daß** das Kühlmittel im Durchfluß durch den Schlauch (44) geführt wird.

32. Verstärker nach Anspruch 29 oder 30, **dadurch gekennzeichnet, daß** der Schlauch (44) und/oder das Kühlmittel eine wellenleitende Eigenschaft besitzt.

33. Verstärker nach einem der Ansprüche 22 bis 32, **dadurch gekennzeichnet, daß** der Kern als Verstärkungsmedium mit Yb- oder Nd-lonen dotiert ist.

34. Verstärker nach einem der Ansprüche 22 bis 33, **dadurch gekennzeichnet, daß** der Lichtwellenleiter einen den Kern umgebenden Mantel aufweist, wobei Pumpstrahlung in mindestens ein Stirnende des Mantels und des Kerns eingekoppelt wird und innerhalb des Mantels und des Kerns die lonen im Kern angeregt und geführt werden.

35. Verstärker nach einem der Ansprüche 22 bis 34, **dadurch gekennzeichnet, daß** um den Lichtwellenleiter ein Resonator gebildet ist.

36. Verstärker nach einem der Ansprüche 22 bis 35, **dadurch gekennzeichnet, daß** die Resonatorspiegel auf den beiden Stirnflächen des Lichtwellenleiters angeordnet sind.

37. Verstärker nach einem der Ansprüche 1 bis 36, **dadurch gekennzeichnet, daß** das Medium mit Strahlung gepumpt wird, deren Wellenlänge mindestens teilweise der schwachen Absorptionslinie des Mediums entspricht.

38. Verstärker nach Anspruch 37, **dadurch gekennzeichnet, daß** das Festkörpermedium Neodym-dotiert ist und mit einer Pumpstrahlung gepumpt wird, deren Wellenlänge etwa 870 nm beträgt.

## Claims

1. Optically pumped amplifier, in particular a solid state amplifier, with an amplification medium and with an optical pumping array, via which the pumping radiation is coupled to the amplification medium, whereby the pumping radiation is formed before coupling and whereby the volume of the amplification medium is only partially pumped, and whereby the pumped volume of the amplification medium (1; 38) in cross section (2; 8; 41) has an approximately rectangular cross section approximately perpendicular to the optical axis, wherein the ratio of the width to height of the approximately rectangular cross section (7; 9; 10; 40) of the pumped volume is greater than 1,8 and wherein the amplification medium (1) is located within a resonator (17; 18; 29), **characterized in that** the resonator is designed so that in the width (15) of the pumped volume an unstable resonator (17, 18) is formed, and that in the height (16) of the pumped volume, a stable resonator (17, 18) is formed.

2. Amplifier according to claim 1, **characterized in that** the ratio of the maximum to the minimum cross sectional width of the pumped volume (7; 9; 10; 40) perpendicular to the optical axis of the amplification medium is smaller than 1,5.

3. Amplifier according to claim 1 or 2, **characterized in that** the amplification medium (1) is pumped from two opposite sides that are roughly perpendicular to the optical axis (4).

4. Amplifier according to one of claims 1 to 3, **characterized in that** the amplification medium (1) is pumped from two opposite sides that are roughly parallel to the optical axis.

5. Amplifier according to one of claims 1 to 4, **characterized in that** the amplification medium is a solid state medium (1; 38).

6. Amplifier according to claim 5, **characterized in that** the solid state medium is divided into different zones (26, 27), with the zones (26, 27) being doped in varying fashion.

7. Amplifier according to claim 6, **characterized in that** the doping decreases from zone to zone toward the pumping source.

8. Amplifier according to one of claims 6 to 7, **characterized in that** the solid state medium is pumped in layered fashion in such a way that the amplification medium has several volumes that are approximately rectangular and in cross section are perpendicular to the optical axis.

9. Amplifier according to one of claims 6 to 8, **characterized in that** at least two solid state media (1) are stacked while placing a cooling device (11) in between.

10. Amplifier according to one of claims 1 to 9, **characterized in that** the pump source or the pump sources of the pumping device is (are) formed by one or more diode lasers (5, 13).

11. Amplifier according to claim 10, **characterized in that** several diode lasers of a pump source are combined to form at least one line of a diode laser bar (5).

12. Amplifier according to claim 11, **characterized in that** the pumping radiation of the laser diode bar (5) is collimated in linear fashion and/or focused by means of a cylindrical lens (6) and coupled to the amplification medium (1; 38).

13. Amplifier according to claim 12, **characterized in that** several diode laser bars (5) are combined atop one another into a field array, whereby the pumping radiation, which is collimated via the respective cylindrical lenses (6), is directed to an additional, focusing cylindrical lens (14), from which it is then coupled into the amplification medium.

14. Amplifier according to claim 9 or 13, **characterized in that** several diode laser bars (5) are placed adjacent to each other.

15. Amplifier according to one of claims 1 to 11, **characterized in that** the pumping radiation is coupled to the amplification medium via one or more optical waveguides, to which a beam formation optical device is subsequently inserted.

16. Amplifier according to one of claims 1 to 15, **characterized in that** the pump source or the pump sources of the pumping device is (are) formed by one or more solid state lasers, excimer lasers and/or ion lasers.

17. Amplifier according to one of claims 1 to 16, **characterized in that** the resonator is designed so that in the width (15) of the pumped volume an off-axis, unstable resonator (17, 18) is formed, and that in the height (16) of the pumped volume, a stable resonator (17, 18) is formed.

18. Amplifier according to claim 1, **characterized in that** the beam quality is homogenized over the corss section(s) of the radiation emitted from the resonator by an optical means (22).

19. Amplifier according to one of claims 1 to 16, **characterized in that** the radiation (19) emitted from the resonator (17, 18) is coupled to one or more optical waveguides (24).

20. Amplifier according to one of claims 1 to 18, **characterized in that** the radiation emitted from the amplification medium (1) is converted by means of an etalon-shaped, non-linear medium (30) in relation to the frequency.

21. Amplifier according to claim 20, **characterizedf in that** the etalon-shaped medium (30) is placed within the resonator (29).

22. Amplifier according to one of claims 1 to 21, **characterized in that** the solid state medium is made in the form of an optical waveguide (38) which has a doped core as an amplification medium.

23. Amplifier according to claim 22, **characterized in that** the core has at least one rectangular doped zone (40) in cross section.

24. Amplifier according to claim 22 or 23, **characterized in that** the optical waveguide is mounted on a cooling body or between two cooling bodies, and is in thermal contact with the cooing body or bodies.

25. Amplifier according to claim 24, **characterized in that** grooves are formed in the cooling body or bodies, and the optical waveguide is embedded in the grooves.

26. Amplifier according to claim 22 or 23, **characterized in that** the optical waveguide (38) is placed in a cooling chamber (44).

27. Amplifier according to claim 26, **characterized in that** the cooling chamber is closed.

28. Amplifier according to claim 26 or 27, **characterized in that** the cooling chamber is filled with coolant.

29. Amplifier according to claim 22 or 23, **characterized in that** the optical waveguide (38) is placed in a hose (44), with a coolant filled in between the hose (44) and the optical waveguide (38).

30. Amplifier according to claim 29, **characterized in that** the optical waveguide (38) within the cooling hose (44) is kept roughly concentric to the cooling hose by means of spacers.

31. Amplifier according to one of claims 28 to 30, **characterized in that** the coolant is caused in flow through the hose (44).

32. Amplifier according to claim 29 or 30, **characterized in that** the hose (44) and/or the coolant has a waveguide property.

33. Amplifier according to one of claims 22 to 32, **characterized in that** the core is doped as an amplification medium with Yb or Nd ions.

34. Amplifier according to one of claims 22 to 33, **characterized in that** the optical waveguide has a cladding surrounding the core, whereby pumping radiation is coupled to at least one of the front end of the cladding and of the front end of the core, and within the cladding and the core the ions in the core are excited and guided.

35. Amplifier according to one of claims 22 to 34, **characterized in that** a resonator is formed around the optical waveguide.

36. Amplifier according to one of claims 22 to 35, **characterized in that** the resonator mirrors are placed on both front surfaces of the optical waveguide.

37. Amplifier according to one of claims 1 to 36, **characterized in that** the medium is pumped with radiation whose wavelength at least partially matches the weak absorption line of the medium.

38. Amplifier according to claim 37, **characterized in that** the solid state medium is neodymium-doped and pumped with a pumping radiation whose wavelength is about 870 nm.

## Revendications

1. Amplificateur pompé optiquement, notamment amplificateur à corps solide, comportant un milieu amplificateur et un dispositif de pompage optique, au moyen duquel un rayonnement de pompage est injecté dans le milieu amplificateur, et dans lequel le rayonnement de pompage est formé avant l'injection et le volume du milieu amplificateur est pompé seulement partiellement, le volume pompé du milieu amplificateur (1; 38) possède une section transversale approximativement rectangulaire dans une coupe transversale (2; 8; 41) perpendiculaire à l'axe optique, le rapport de la largeur à la hauteur de la section transversale approximativement rectangulaire (7; 9; 10; 40) du volume pompé est supérieur à 1,8, et le milieu amplificateur (1) est disposé à l'intérieur d'un résonateur (17; 18; 29), **caractérisé en ce que** le résonateur est agencé de telle sorte qu'un résonateur instable (17, 18) est formé sur la largeur (15) du volume pompe et qu'un résonateur stable (17, 18) est formé sur la hauteur (16) du volume pompé.

2. Amplificateur selon la revendication 1, **caractérisé en ce que** le rapport de la largeur maximale à la largeur minimale de la section transversale du volume pompe (7; 9; 10; 40) perpendiculairement à l'axe optique du milieu amplificateur est inférieur à 1,5.

3. Amplificateur selon la revendication 1 ou 2, **caractérisé en ce que** le milieu amplificateur (1) est pompé sur deux côtés opposés approximativement perpendiculairement à l'axe optique (4).

4. Amplificateur selon l'une des revendications 1 à 3, **caractérisé en ce que** le milieu amplificateur (1) est pompé sur deux côtés opposés approximativement parallèlement à l'axe optique.

5. Amplificateur selon l'une des revendications 1 à 4, **caractérisé en ce que** le milieu amplificateur est un milieu à corps solide (1; 38).

6. Amplificateur selon la revendication 5, **caractérisé en ce que** le milieu à corps solide est divisé en différentes zones (26, 27), les zones (26, 27) étant dopée différemment.

7. Amplificateur selon la revendication 6, **caractérisé en ce que** le dopage diminue zone après zone en direction de la source de pompage.

8. Amplificateur selon l'une des revendications 6 et 7, **caractérisé en ce que** le milieu à corps solide est pompé couche par couche de telle sorte que le milieu amplificateur comporte plusieurs volumes pompés approximativement rectangulaires dans une coupe transversale perpendiculaire à l'axe optique.

9. Amplificateur selon l'une des revendications 6 à 8, **caractérisé en ce qu'**au moins deux milieux à corps solide (1) sont empilés moyennant l'interposition d'un dispositif de refroidissement (11).

10. Amplificateur selon l'une des revendications 1 à 9, **caractérisé en ce que** la ou les sources de pompage du dispositif de pompage sont formées par une ou plusieurs diodes laser (5, 13).

11. Amplificateur selon la revendication 10, **caractérisé en ce que** plusieurs diodes laser d'une source de pompage sont réunies sur au moins une ligne en formant une barre (5) de diodes laser.

12. Amplificateur selon la revendication 11, **caractérisé en ce que** le rayonnement de pompage de la barre (5) de diodes laser est collimaté sous une forme linéaire au moyen d'une lentille cylindrique (6) et/ou est injecté dans le milieu amplificateur (1; 38) en étant collimaté et/ou focalisé sous la forme d'une ligne.

13. Amplificateur selon la revendication 12, **caractérisé en ce que** plusieurs barres de diodes laser (5) sont réunies en étant superposées pour former un dispositif de champ, le rayonnement de pompage, qui est collimaté par l'intermédiaire des lentilles cylindriques respectives (6), étant envoyé à une autre lentille cylindrique de focalisation (14), à partir de laquelle le rayonnement est injecté dans le milieu amplificateur.

14. Amplificateur selon la revendication 9 ou 13, **caractérisé en ce que** plusieurs barres de diodes laser (5) sont disposées côte-à-côte.

15. Amplificateur selon l'une des revendications 1 à 11, **caractérisé en ce que** le rayonnement de pompage est injecté dans le milieu amplificateur par un ou plusieurs guides d'ondes lumineuses, en aval desquels est disposé un système optique de formation de rayonnement.

16. Amplificateur selon l'une des revendications 1 à 115, **caractérisé en ce que** la ou les sources de pompage du dispositif de pompage sont formées par plusieurs lasers à corps solide, lasers excimères et/ou lasers ioniques.

17. Amplificateur selon l'une des revendications 1 à 116, **caractérisé en ce que** le résonateur est agencé de telle sorte qu'un résonateur instable à axe décalé (17, 18) est formé sur la largeur (15) du volume pompé et un résonateur stable (17, 18) est formé sur la hauteur (16) du volume pompé.

18. Amplificateur selon la revendication 1, **caractérisé en ce que** la qualité du rayonnement sur la ou les sections transversales du rayonnement sortant du résonateur est homogénéisée par un dispositif optique (22).

19. Amplificateur selon l'une des revendications 1 à 16, **caractérisé en ce que** le rayonnement (19) qui sort du résonateur (17, 18), est injecté dans un ou plusieurs guides d'ondes lumineuses (24).

20. Amplificateur selon l'une des revendications 1 à 18, **caractérisé en ce que** le rayonnement, qui sort du milieu amplificateur (1) est converti, du point de vue de la fréquence, au moyen d'un milieu non linéaire en forme d'étalon (30).

21. Amplificateur selon la revendication 20, **caractérisé en ce que** le milieu en forme d'étalon (30) est disposé à l'intérieur du résonateur (29).

22. Amplificateur selon l'une des revendications 1 à 21, **caractérisé en ce que** le milieu à corps solide est agencé sous la forme d'un guide d'ondes lumineuses (38), qui comporte un noyau dopé en tant que milieu amplificateur (23).

23. Amplificateur selon la revendication 22, **caractérisé en ce que** le noyau possède en coupe transversale au moins une zone rectangulaire dopée (40).

24. Amplificateur selon la revendication 22 ou 23, **caractérisé en ce que** le guide d'ondes lumineuses est monté sur un corps de refroidissement ou entre deux corps de refroidissement et est placé en contact thermique avec le ou les corps de refroidissement.

25. Amplificateur selon la revendication 24, **caractérisé en ce que** des rainures sont formées dans le ou les corps de refroidissement et le guide d'ondes lumineuses est inséré dans les rainures.

26. Amplificateur selon la revendication 22 ou 23, **caractérisé en ce que** le guide d'ondes lumineuses (38) est inséré dans une chambre de refroidissement (44).

27. Amplificateur selon la revendication 26, **caractérisé en ce que** la chambre de refroidissement est fermée.

28. Amplificateur selon la revendication 26 ou 27, **caractérisé en ce que** la chambre de refroidissement est remplie par le fluide de refroidissement.

29. Amplificateur selon la revendication 22 ou 23, **caractérisé en ce que** le guide d'ondes lumineuses (38) est disposé dans un tuyau (44), un milieu de refroidissement étant inséré entre le tuyau (44) et le guide d'ondes lumineuses (38).

30. Amplificateur selon la revendication 29, **caractérisé en ce que** le guide d'ondes lumineuses (38) est maintenu, à l'intérieur du tuyau de refroidissement (44), dans une position approximativement concentrique à ce tuyau à l'aide d'entretoises.

31. Amplificateur selon l'une des revendications 28 à 30, **caractérisé en ce que** le milieu de refroidissement est guidé selon un flux traversant dans le tuyau (44)

32. Amplificateur selon la revendication 29 ou 30, **caractérisé en ce que** le tuyau (44) et/ou le fluide de refroidissement possède une caractéristique de guidage des ondes.

33. Amplificateur selon l'une des revendications 22 à 32, **caractérisé en ce que** le noyau en tant que milieu amplificateur est dopé par des ions Yb ou Nd.

34. Amplificateur selon l'une des revendications 22 à 33, **caractérisé en ce que** le guide d'ondes lumineuses comporte une enveloppe entourant le coeur, le rayonnement de pompage est injecté dans au moins une extrémité frontale de la gaine du coeur et à l'intérieur de la gaine et du coeur, les ions sont excités et guidés dans le coeur.

35. Amplificateur selon l'une des revendications 22 à 34, **caractérisé en ce qu'**un résonateur est formé autour du guide d'ondes lumineuses.

36. Amplificateur selon l'une des revendications 22 à 35, **caractérisé en ce que** les miroirs du résonateur sont disposés sur les deux surfaces frontales du guide d'ondes lumineuses.

37. Amplificateur selon l'une des revendications 1 à 36, **caractérisé en ce que** le milieu est pompé par un rayonnement, dont la longueur d'onde correspond au moins partiellement à la raie d'absorption faible du milieu.

38. Amplificateur selon la revendication 37, **caractérisé en ce que** le milieu à corps solide est dopé au néodyme et est pompé avec un rayonnement de pompage, dont la longueur d'onde est égale à environ 870 nm.
